# EUROPEAN PATENT SPECIFICATION

(11) **EP 3 354 539 B1**
(45) Date of publication and mention of the grant of the patent: **01.04.2020**
(21) Application number: 16864300.5
(22) Date of filing: 10.11.2016
(51) Int. Cl.: B62D 5/04, B21K 1/12, C21D 1/06

(54) **ELECTRIC POWER STEERING DEVICE AND MANUFACTURING METHOD THEREFOR**
ELEKTRISCHE SERVOLENKVORRICHTUNG UND HERSTELLUNGSVERFAHREN DAFÜR
DISPOSITIF DE DIRECTION ASSISTÉE ÉLECTRIQUE ET PROCÉDÉ POUR SA FABRICATION

(30) Priority: 12.11.2015 JP 2015222413
(43) Date of publication of application: 01.08.2018
(73) Proprietor: NSK Ltd., Tokyo 141-8560 (JP)
(72) Inventor: SHIGETA, Taishi, Maebashi-shi Gunma 371-8527 (JP)
(74) Representative: Mewburn Ellis LLP
(86) International application number: PCT/JP2016/083356
(87) International publication number: WO 2017/082339

(56) References cited:
- DE-A1- 4 214 368
- JP-A- 2000 193 541
- JP-A- 2006 224 767
- JP-A- 2008 057 022
- JP-A- 2010 083 335
- JP-A- 2015 101 237
- JP-A- 2015 101 237
- JP-A- 2015 152 092

## Description

### TECHNICAL FIELD

The present invention relates to improvements on an electric power steering device configured to reduce a force, which is necessary for a driver to operate a steering wheel, by using an electric motor as a generation source of auxiliary power, and a manufacturing method therefor.

### RELATED ART

When applying a steering angle to a steering wheel of an automobile (generally, front wheels except a special vehicle such as a forklift), an electric power steering device configured to use an electric motor as an auxiliary power source has been widely used as a device for reducing a force necessary for a driver to operate a steering wheel. As the electric power steering device, a variety of structures such as a column assist-type, a pinion assist-type and the like have been considered. In any structure, a rotary shaft configured to rotate in accordance with an operation of the steering wheel is applied with auxiliary power of the electric motor via a decelerator.

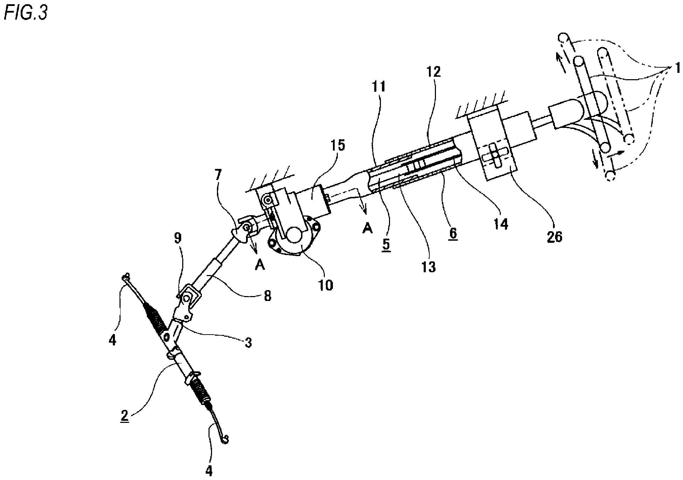

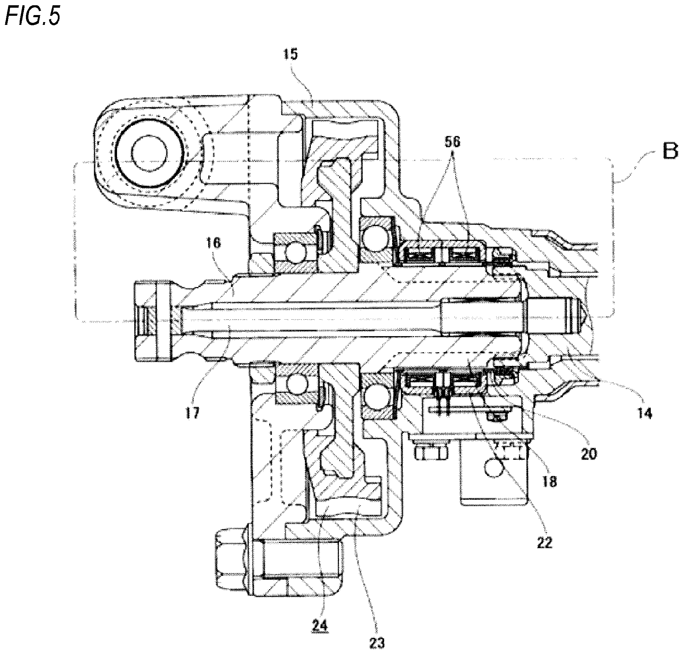

FIGS. 3 to 6 depict an example of the related art of a column assist-type electric power steering device disclosed in Patent Document 1. The electric power steering device is configured to transmit rotation of a steering wheel 1 to an input shaft 3 of a steering gear unit 2, and to push and pull a pair of left and right tie-rods 4, 4 in association with rotation of the input shaft 3, thereby applying a steering angle to wheels. The steering wheel 1 is supported and fixed to a rear end portion of a steering shaft 5. The steering shaft 5 is rotatably supported to a cylindrical steering column 6 supported to a vehicle body with being inserted in the steering column 6 in an axial direction. Also, a front end portion of the steering shaft 5 is connected to a rear end portion of an intermediate shaft 8 via a universal joint 7. A front end portion of the intermediate shaft 8 is connected to the input shaft 3 via a separate universal joint 9. Also, the shown example is an electric power steering device configured to reduce a force, which is necessary to operate the steering wheel 1, by using an electric motor 10 as a generation source of auxiliary power. Meanwhile, in the specification and the claims, a front and rear direction indicates a front and rear direction of a vehicle, unless particularly mentioned.

The steering column 6 is configured by combining an inner column 11 and an outer column 12 so that an entire length thereof can be contracted upon secondary collision. The steering column 6 is supported to the vehicle body (not shown). Also, the steering shaft 5 is rotatably supported inside the steering column 6. The steering shaft 5 is configured by combining a lower shaft 13 corresponding to the input shaft of the claims and an upper shaft 14 so that torque can be transmitted and an entire length thereof can be contracted upon secondary collision. Also, the steering wheel 1 is fixed to a rear end portion of the upper shaft 14 protruding from a rear end opening of the outer column 12. Also, a front end portion of the inner column 11 is joined and fixed with a housing 15, and a front half part of the lower shaft 13 is inserted in the housing 15.

An output shaft 16 corresponding to the output shaft of the claims is coupled to a front side of the lower shaft 13 with relative rotation to the lower shaft 13 being restrained within a predetermined angle range. Also, the output shaft 16 and the lower shaft 13 are coaxially coupled to each other via a torsion bar 17 made of spring steel.

Also, a part near a rear end of an outer peripheral surface of the output shaft 16 is provided with a torque detection concavity and convexity 18 having a circumferential concavo-convex shape (gear wheel shape). The torque detection concavity and convexity 18 corresponds to the torque detection encoder part of the claims. The torque detection concavity and convexity 18 is formed by providing the part near the rear end of the outer peripheral surface of the output shaft 16 with a plurality of axially long detection grooves 19, 19 equidistantly spaced in a circumferential direction.

Also, a cylindrical torque detection sleeve 20 made of non-magnetic metal having conductivity such as aluminum alloy is arranged at an outer diameter side of the torque detection concavity and convexity 18. The torque detection sleeve 20 is formed to have a cylindrical shape by non-magnetic metal having conductivity such as aluminum alloy. The torque detection sleeve 20 is supported and fixed to a front end portion of the lower shaft 13 with being concentrically arranged at the outer diameter side of the torque detection concavity and convexity 18.

Also, a part ranging from a front end portion to an intermediate portion, which is arranged at the outer diameter side of the torque detection concavity and convexity 18, of the torque detection sleeve 20 is formed with a plurality of substantially rectangular window holes 21, 21 arranged axially in a double-row and equidistantly spaced in the circumferential direction. Circumferential phases of the window holes 21, 21 of both rows are offset each other by a half pitch. Also, a torque detection coil unit 22 internally fitted and fixed to the housing 15 is arranged at an outer diameter side of the torque detection concavity and convexity 18 and the torque detection sleeve 20.

Also, a worm wheel 23 is externally fitted and fixed to an axially intermediate part of the output shaft 16. A worm (not shown) rotatably supported in the housing 15 is meshed with the worm wheel 23.

According to the electric power steering device configured as described above, when a driver operates the steering wheel 1 to apply torque, which is a steering force, to the steering shaft 5, the torsion bar 17 is elastically distorted (within the predetermined angle range) in correspondence to a direction and a magnitude of the torque. Accompanied by this, a circumferentially positional relation between the torque detection concavity and convexity 18 and the torque detection sleeve 20 is changed, so that an impedance change occurs in a coil 56 of the torque detection coil unit 22. For this reason, it is possible to detect the direction and magnitude of the torque on the basis of the impedance change. The electric motor 10 is configured to generate auxiliary power in correspondence to a detection result of the torque. The auxiliary power is increased by a worm-type decelerator 24 configured by the worm wheel 23 and the worm meshed with each other, and is then applied to the output shaft 16. As a result, a force that is necessary for the driver to operate the steering wheel 1 is reduced.

In recent years, as the vehicle is made smaller and lighter, it is also needed to make the steering device smaller and lighter. For this reason, it is considered to make a diameter of the output shaft 16 smaller. However, when a diameter of the torque detection concavity and convexity 18 is made smaller as the diameter of the output shaft 16 is made smaller, there is room for improvement from a standpoint of securing strength of the torque detection concavity and convexity 18.

### Citation List

### Patent Documents

Patent Document 1: JP-A-2015-124774
Patent Document 2: JP-2015-101237 A discloses an electrically-driven power steering device capable of increasing strength of connection between a lower shaft and a torque detecting sleeve by engagement of a male serration part on the lower shaft and a caulking part of the torque detecting sleeve, according to the preamble of claim 1.

### SUMMARY OF THE INVENTION

### Problems To Be Solved

The present invention has been made in view of the above situations, and is to implement a structure capable of securing strength of a torque detection concavity and convexity configuring an output shaft even when miniaturization and weight saving are intended.

### Means for Solving Problems

An electric power steering device according to claim 1.

When implementing the electric power steering device, for example, one axial end portion of the output shaft may be provided with a joint fixing part for joining and fixing thereto a torque transmission joint, and the nitride layer may be formed on an outer peripheral surface of the joint fixing part.

Also, an electric power steering device, which is to be manufactured by a manufacturing method according to claim 3.

When implementing the manufacturing method of an electric power steering device, for example, the output shaft may be made by cold forging. After the cold forging, the soft-nitriding treatment may be performed.

### Effects of the Invention

According to the electric power steering device, it is possible to secure strength of the torque detection encoder part configuring the output shaft even when miniaturization and weight saving are intended.

That is, the electric power steering device includes the nitride layer formed, amongst other parts, at the part, at which the torque detection encoder part is formed, of the outer peripheral surface of the output shaft. For this reason, even though a diameter of the output shaft is made smaller for miniaturization and weight saving of the electric power steering device, it is possible to solidify a surface of the torque detection encoder part, thereby improving the durability.

### BRIEF DESCRIPTION OF THE DRAWINGS

FIG. 1 is an enlarged view of a part corresponding to a B part of FIG. 5, depicting an example of an embodiment.
FIG. 2 is a line diagram showing a change in measurement sensitivity of torque relative to a gap between a torque detection coil unit and a convex part of a torque detection concavity and convexity for an output shaft having a nitride layer formed thereon by a soft-nitriding treatment and an output shaft having a hard coating formed thereon by electroless nickel plating.
FIG. 3 is a partial cut side view depicting an example of a steering device of the related art.
FIG. 4 is an enlarged sectional view taken along a line A-A of FIG. 3.
FIG. 5 is an enlarged view of a C part of FIG. 4.
FIG. 6 is an exploded perspective view of respective members configuring a torque detection part.

### DETAILED DESCRIPTION OF EMBODIMENTS

### [Example of Embodiment]

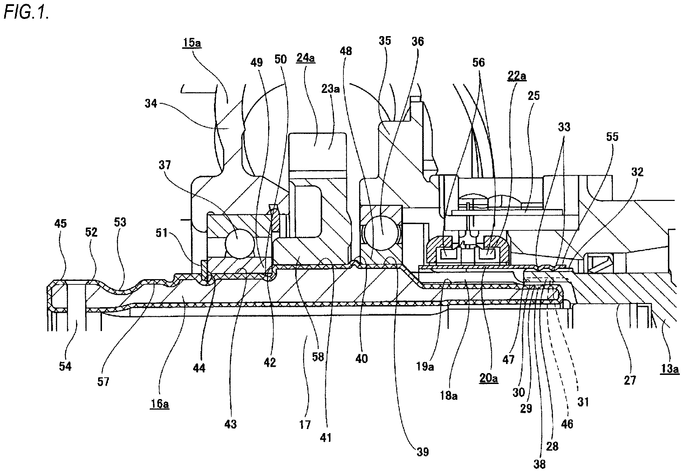

An example of an embodiment of the present invention will be described with reference to FIG. 1.

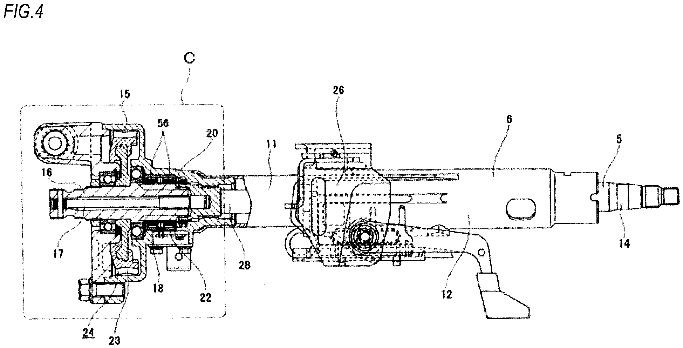

An electric power steering device of the example includes the steering column 6 (refer to FIGS. 3 and 4), the steering shaft 5 (refer to FIGS. 3 and 4), a housing 15a, an output shaft 16a, the torsion bar 17, a torque detection sleeve 20a, a torque detection coil unit 22a, a substrate 25, a worm-type decelerator 24a, and the electric motor 10 (refer to FIG. 3).

The steering column 6 is configured by a cylindrical inner column 11 arranged at a front side and a cylindrical outer column 12 arranged at a rear side, which are combined to be expandable and contractible. The steering column 6 is supported to a vehicle body by a support bracket 26. Both the inner and outer columns 11, 12 are made of steel or light alloy such as aluminum alloy.

The steering shaft 5 is configured by spline fitting the upper shaft 14 having a hollow shaft shape and arranged at a rear side to a lower shaft 13a arranged at a front side so that torque can be transmitted and axial relative displacement can be made. The steering shaft 5 is rotatably supported inside the steering column 6. Both the lower and upper shafts 13a, 14 are made of steel. Also, the steering wheel 1 (refer to FIG. 3) is fixed to the rear end portion of the upper shaft 14 protruding from the rear end opening of the outer column 12. Meanwhile, in this example, the lower shaft 13a corresponds to the input shaft of the claims.

Also, a spline hole 27 is formed at a radially central portion of a part near a front end of the lower shaft 13a. Also, a cylindrical part 28 is provided at a front end portion of the lower shaft 13a. An inner peripheral surface of the cylindrical part 28 is provided with a female stopper part 29 having a circumferential concave-convex shape (gear wheel shape). A diameter of an inscribed circle of the female stopper part 29 is larger than the spline hole 27. The female stopper part 29 is formed by arranging a plurality of axially long female-side tooth parts 30 and female-side grooves 31 alternately and with equal pitches in a circumferential direction on the inner peripheral surface of the cylindrical part 28. Also, an outer peripheral surface of the cylindrical part 28 is provided with a plurality of axially long axial grooves 32 equidistantly spaced in the circumferential direction. Also, a part, which overlaps radially with an engagement part between the female stopper part 29 and a male stopper part 38 (which will be described later), of the outer peripheral surface of the cylindrical part 28 is provided with a pair of circumferential grooves 33, 33, each of which is long in the circumferential direction, over an entire circumference.

The housing 15a is configured by a front cover body 34 and a rear main body 35 joined with each other by a plurality of bolts (not shown). The housing 15a is joined and fixed to the front end portion of the inner column 11. The front cover body 34 and the rear main body 35 are respectively made of light alloy such as aluminum alloy or synthetic resin. A front end portion of the lower shaft 13a is inserted in the housing 15a.

Also, the output shaft 16a is formed to have a hollow shaft shape by steel, which is magnetic metal. The output shaft 16a is rotatably supported to a front side of the lower shaft 13a in the housing 15a by a first ball bearing 36 and a second ball bearing 37. Meanwhile, in this example, the second ball bearing 37 corresponds to the rolling bearing of the claims.

The output shaft 16a is provided with a male stopper part 38, a torque detection concavity and convexity 18a, a first bearing fitting part 39, a positioning convex part 40, a worm wheel fitting part 41, a positioning step part 42, a second bearing fitting part 43, a snap ring engaging groove 44, and a joint fixing part 45 in corresponding order from the rear side.

The male stopper part 38 is formed on an outer peripheral surface of a rear end portion of the output shaft 16a and has a concavo-convex shape (gear wheel shape) in the circumferential direction. An outer diameter dimension (a diameter of a circumscribed circle) of the male stopper part 38 is smaller than a part near a rear end (the torque detection concavity and convexity 18a (which will be described later), which is a part adjacent to the front side with respect to the axial direction). Specifically, the male stopper part 38 is formed by arranging a plurality of axially long male-side tooth parts 46 and male-side grooves 47 alternately and with equal pitches in the circumferential direction at a rear end portion of an outer peripheral surface of the output shaft 16a. The number of the male-side tooth parts 46 (the male-side grooves 47) is the same as the number of the female-side tooth parts 30 (the female-side grooves 31) configuring the female stopper part 29.

The torque detection concavity and convexity 18a corresponds to the torque detection encoder part of the claims. The torque detection concavity and convexity 18a is formed at a part near the rear end, which is a part adjacent to the front end side of the male stopper part 38 with respect to the axial direction, of the outer peripheral surface of the output shaft 16a. The torque detection concavity and convexity 18a has a concavo-convex shape (gear wheel shape) in the circumferential direction where a diameter of a circumscribed circle thereof is larger than the male stopper part 38. Specifically, the torque detection concavity and convexity 18a is configured by a plurality of axially long detection grooves 19a equidistantly spaced in the circumferential direction at a part near a rear end of the outer peripheral surface of the output shaft 16a. In the above structure, the number of the detection grooves 19a is the same as the number of the male-side grooves 47. Also, each of the detection grooves 19a and each of the male-side grooves 47 are provided to be axially continuous. That is, circumferential phases of each of the detection grooves 19a and each of the male-side grooves 47 are the same. Also, in this example, a diameter of a circumscribed circle of the torque detection concavity and convexity 18a is smaller than a diameter of a circumscribed circle of the torque detection concavity and convexity 18 of the related art. In this way, the output shaft 16a is made smaller and lighter.

In an assembled state, the male stopper part 38 and the female stopper part 29 of the lower shaft 13a are concavity/convexity engaged with each other so as to relatively rotatable (such as loose spline engagement) within a predetermined angle range (for example, a range of ±5° on the basis of a neutral state in which the torsion bar 17 is not distorted). That is, each of the female-side grooves 31 (each of the female-side tooth parts 30) is loosely engaged to each of the male-side tooth parts 46 (each of the male-side grooves 47) with a circumferential gap, so that relative rotation between the lower shaft 13a and the output shaft 16a is restrained to the predetermined angle range. Thereby, the torsion bar 17 is prevented from being excessively distorted.

The first bearing fitting part 39 is provided at a part, which is adjacent to the front of the torque detection concavity and convexity 18a, of the output shaft 16a. An outer peripheral surface of the first bearing fitting part 39 has a cylindrical surface shape of which an outer diameter is constant in the axial direction. In the assembled state, a first inner ring 48 configuring the first ball bearing 36 is externally fitted and fixed to the outer peripheral surface of the first bearing fitting part 39.

The positioning convex part 40 is provided at a part, which is adjacent to the front of the first bearing fitting part 39, of the outer peripheral surface of the output shaft 16a. The positioning convex part 40 protrudes radially outward over an entire circumference of the corresponding part. In the assembled state, a radially inner end portion of a rear surface of a worm wheel 23a configuring the worm-type decelerator 24a is contacted to a front surface of the positioning convex part 40. In this way, the worm wheel 23a is restrained from being displaced rearward.

The worm wheel fitting part 41 is provided at a part, which is adjacent to the front of the torque detection concavity and convexity 18a, of the output shaft 16a. An outer peripheral surface of the worm wheel fitting part 41 has a cylindrical surface shape of which an outer diameter is constant in the axial direction. In the assembled state, the worm wheel 23a configuring the worm-type decelerator 24a is externally fitted and fixed to an outer peripheral surface of the worm wheel fitting part 41. In this example, an outer diameter of the worm wheel fitting part 41 is the same as an outer diameter of the first bearing fitting part 39.

The positioning step part 42 corresponds to the step part of the claims. A radially outer end edge of the positioning step part 42 continues to a front end edge of the worm wheel fitting part 41. A radially inner end edge of the positioning step part 42 continues to a rear end edge of the second bearing fitting part 43. The positioning step part 42 is provided to be perpendicular to a central axis of the output shaft 16a. In the assembled state, a radially inner half part of a rear surface of a second inner ring 49 configuring the second ball bearing 37 is contacted to the positioning step part 42. In this way, the second ball bearing 37 (the second inner ring 49) is restrained from being displaced rearward. Meanwhile, in the assembled state, an axial gap exists between the rear surface of the second inner ring 49 and a radially inner end portion of a front surface of a metal insert 58 configuring the worm wheel 23a (the rear surface of the second inner ring 49 and the radially inner end portion of the front surface of the metal insert 58 are not contacted to each other).

The second bearing fitting part 43 corresponds to the bearing fitting part of the claims. The second bearing fitting part 43 is provided at a part, which is adjacent to the front of the positioning step part 42, of the output shaft 16a. A rear end portion of an outer peripheral surface of the second bearing fitting part 43 is formed with a concave groove 50 for preventing interference with a rear end edge of an inner peripheral surface of the second inner ring 49 of the second ball bearing 37 over an entire circumference. Also, a part, which is adjacent to the front of the concave groove 50, of the second bearing fitting part 43 has a cylindrical surface shape of which an outer diameter is constant in the axial direction. In the assembled state, the second inner ring 49 of the second ball bearing 37 is externally fitted and fixed to the outer peripheral surface (a part except the concave groove 50) of the second bearing fitting part 43. In this example, an outer diameter (a part except the concave groove 50) of the second bearing fitting part 43 is smaller than the outer diameters of the worm wheel fitting part 41 and the first bearing fitting part 39.

The snap ring engaging groove 44 corresponds to the engagement groove of the claims. The snap ring engaging groove 44 is formed at a part, which is adjacent to the front of the second bearing fitting part 43, of the outer peripheral surface of the output shaft 16a over an entire circumference. In the assembled state, the snap ring engaging groove 44 is engaged with a radially inner end portion of a circular ring-shaped snap ring 51. A part, which protrudes radially outward from the snap ring engaging groove 44, of a rear surface of the snap ring 51 is in contact with a front surface of the second inner ring 49 of the second ball bearing 37. In this way, the second ball bearing 37 (the second inner ring 49) is restrained from being displaced forward.

The joint fixing part 45 is provided at a front end portion of the output shaft 16a. An outer peripheral surface of the joint fixing part 45 is formed with a male spline part 52 consisting of concave and convex parts alternately provided in the circumferential direction. Also, an axially intermediate part of the outer peripheral surface of the joint fixing part 45 is formed with a concave groove 53 formed to be continuous over an entire circumference with being perpendicular to the male spline part 52. The joint fixing part 45 is joined and fixed with a rear yoke of a pair of yokes configuring the universal joint 7. Specifically, a female spline part formed on an inner peripheral surface of a coupling part of the yoke and the male spline part 52 of the joint fixing part 45 are spline engaged with each other. In this state, a male screw portion of a bolt inserted in a through-hole of one of a pair of flange portions provided at the coupling part is screwed into a female screw portion formed in the other flange portion. In this joined state, a circumferential part of the concave groove 53 and an axially intermediate portion of the bolt are engaged with each other, so that the output shaft 16a is prevented from axially separating from the yoke.

Meanwhile, in this example, a diameter of a circumscribed circle of a convex part (a part between the detection grooves 19a in the circumferential direction) configuring the torque detection concavity and convexity 18a is made smaller than an outer diameter of the first bearing fitting part 39 and an outer diameter of the worm wheel fitting part 41. Also, the diameter of the circumscribed circle of the convex part configuring the torque detection concavity and convexity 18a is made to be the same (or to be substantially the same) as an outer diameter of the second bearing fitting part 43.

Also, the torsion bar 17 is made of spring steel. The torsion bar 17 coaxially couples the lower shaft 13a and the output shaft 16a. In a state where most of the torsion bar 17 except the rear end portion is arranged at an inner diameter side of the output shaft 16a, the front end portion of the torsion bar is joined to the front end portion of the output shaft 16a so as not to be relatively rotatable by a pin 54, and the rear end portion is spline fitted to the spline hole 27 of the lower shaft 13a so as not to be relatively rotatable.

Also, the torque detection sleeve 20a is formed to have a cylindrical shape by non-magnetic metal having conductivity such as aluminum alloy. The torque detection sleeve 20a is concentrically arranged at an outer diameter side of the torque detection concavity and convexity 18a. A base end portion (rear end portion) of the torque detection sleeve 20a is externally fitted and fixed to the cylindrical part 28 of the lower shaft 13a. Specifically, a plurality of protrusions 55 provided at a part near a base end of an inner peripheral surface of the torque detection sleeve 20a is engaged with the respective axial grooves 32 formed at the cylindrical part 28 of the lower shaft 13a, respectively, so that the torque detection sleeve 20a is prevented from rotating relative to the cylindrical part 28. Also, a base end edge part and a part near a base end of the torque detection sleeve 20a are swaged to both circumferential grooves 33, 33 formed at the cylindrical part 28 of the lower shaft 13a, so that the torque detection sleeve 20a is axially positioned and prevented from being axially displaced relative to the cylindrical part 28.

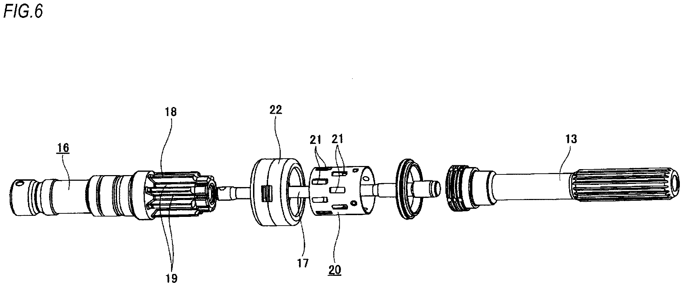

Also, a part ranging from a leading end portion (front end portion) to an intermediate portion, which is arranged at the outer diameter side of the torque detection concavity and convexity 18a, of the torque detection sleeve 20a is formed with the plurality of substantially rectangular window holes 21, 21 (refer to FIG. 6) arranged axially in a double-row and equidistantly spaced in the circumferential direction. Circumferential phases of the window holes 21, 21 of both rows are offset each other by a half pitch. Also, an inner diameter dimension of the part, which is arranged at the outer diameter side of the torque detection concavity and convexity 18a, of the torque detection sleeve 20a is larger than the diameter (outer diameter dimension) of the circumscribed circle of the torque detection concavity and convexity 18a.

Also, the torque detection coil unit 22a is cylindrical. The torque detection coil unit 22a is concentrically arranged at an outer diameter side of the torque detection concavity and convexity 18a and the torque detection sleeve 20a. The torque detection coil unit 22a is internally fitted and fixed to the housing 15a and has a pair of coils 56, 56. Both the coils 56, 56 are arranged to radially overlap with portions, at which the window holes 21, 21 of the two rows are provided, of the torque detection sleeve 20a.

Also, the substrate 25 is provided below the torque detection coil unit 22a in the housing 15a. A motor control circuit is configured on the substrate 25. Also, end portions of both the coils 56, 56 are connected to the motor control circuit.

Also, the worm-type decelerator 24a is configured by a combination of the worm wheel 23a and a worm (not shown). The worm wheel 23a is externally fitted and fixed to the worm wheel fitting part 41 of the output shaft 16a. Also, the worm is rotatably supported in the housing 15a with being meshed with the worm wheel 23a.

Also, the electric motor 10 is supported and fixed to the housing 15a. An output shaft (not shown) of the electric motor 15a is joined to a base end portion of the worm so that torque can be transmitted.

Particularly, in the case of the electric power steering device of the example, a nitride layer 57 is formed on a surface of the output shaft 16a. That is, the nitride layer 57 (a part shown with oblique lattices in FIG. 1) is formed on the outer peripheral surface of the output shaft 16a, the inner peripheral surface of the output shaft 16a and both axial end faces.

The nitride layer 57 having a predetermined depth dimension is formed on the outer peripheral surface of the output shaft 16a, specifically, an outer peripheral surface of the male stopper part 38, an outer peripheral surface of the torque detection concavity and convexity 18a, the outer peripheral surface of the first bearing fitting part 39, an outer peripheral surface of the positioning convex part 40, the outer peripheral surface of the worm wheel fitting part 41, an outer peripheral surface of the positioning step part 42, the outer peripheral surface of the second bearing fitting part 43, an outer peripheral surface of the snap ring engaging groove 44, and the outer peripheral surface of the joint fixing part 45. In the meantime, the nitride layer may be formed only on the outer peripheral surface of the torque detection concavity and convexity 18a with respect to the outer peripheral surface of the output shaft 16a or on a part of the outer peripheral surface of the output shaft 16a, including the outer peripheral surface of the torque detection concavity and convexity 18a.

Subsequently, a manufacturing method of the output shaft 16a is described.

First, an extrusion steel material or a drawing material is cut into a predetermined length to obtain a solid rod-shaped material.

Then, the material is perforated to form a first intermediate material having a cylindrical shape.

Then, the first intermediate material is subjected to cold forging and necessary cutting processing, so that a second intermediate material having a shape as shown in FIG. 1 is made. In the meantime, the process to make the second intermediate material from the first intermediate material may be performed by a plurality of cold forging.

Next, a soft-nitriding treatment is performed for the second intermediate material, so that the nitride layer 57 is formed on surfaces (the outer peripheral surface, the inner peripheral surface and both axial end faces) of the second intermediate material. For the soft-nitriding treatment, a salt bath soft-nitriding treatment or a gas soft-nitriding treatment may be adopted. Specifically, for the soft-nitriding treatment, a heating treatment is performed at 450°C to 550°C for a predetermined time period in a salt bath (in the case of the salt bath soft-nitriding treatment) having cyanate as a main component or under atmosphere containing an ammonia gas and the like (in the case of the gas soft-nitriding treatment). Then, slow cooling is performed at a predetermined rate in a furnace or in the air outside the furnace where the soft-nitriding treatment was performed. In the meantime, when the slow cooling cannot be performed, a heating treatment is performed at 80°C to 200°C after the soft-nitriding treatment.

Also, after the soft-nitriding treatment, an oxide coating treatment such as a steam treatment (homo-treatment) is performed on a surface of the nitride layer 57, so that an oxide coating (not shown) is formed.

In the case of the electric power steering device configured as described above, when a driver operates the steering wheel 1 to apply torque, which is a steering force, to the steering shaft 5, the torsion bar 17 is elastically distorted (within the predetermined angle range) in correspondence to a direction and a magnitude of the torque. Accompanied by this, a circumferentially positional relation between the torque detection concavity and convexity 18a and the torque detection sleeve 20a is changed, so that an impedance change occurs in the coils 56, 56 of the torque detection coil unit 22a. For this reason, it is possible to detect the direction and magnitude of the torque on the basis of the impedance change. The electric motor 10 is configured to generate auxiliary power in correspondence to a detection result of the torque. The auxiliary power is increased by the worm-type decelerator 24a configured by the worm wheel 23a and the worm meshed with each other, and is then applied to the output shaft 16a. As a result, a force that is necessary for the driver to operate the steering wheel 1 is reduced.

In the meantime, when the high torque (steering force) is input from the steering wheel 1 to the steering shaft 5 and thus a distortion amount of the torsion bar 17 reaches one or other upper limit of the predetermined angle range, the female-side tooth parts 30 configuring the female stopper part 29 and the male-side tooth parts 46 configuring the male stopper part 38 are meshed with each other in the circumferential direction. Based on the meshing, a part of the torque (steering force) is directly transmitted from the lower shaft 13a to the output shaft 16a.

Also, according to the example as described above, it is possible to secure the strength of the torque detection concavity and convexity 18a configuring the output shaft 16a even when miniaturization and weight saving are intended.

That is, according to the example, the nitride layer 57 is formed on the surfaces (the outer peripheral surface, the inner peripheral surface and both axial end faces) of the output shaft 16a. For this reason, even when the diameter of the output shaft 16a is made smaller for miniaturization and weight saving of the electric power steering device, it is possible to solidify the surfaces of the output shaft 16a, thereby improving the durability of the output shaft 16a (particularly, the torque detection concavity and convexity 18a). Also, the nitride layer 57 can improve antirust performance and robustness against environmental changes due to temperature change and the like.

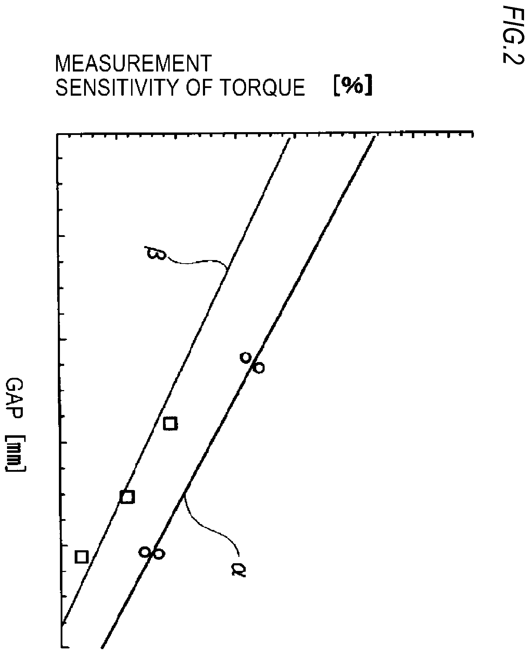

Also, according to the example, since the output shaft 16a is made by the cold forging, as described above, the processing strain may remain in the output shaft 16a. If the processing strain remains in the output shaft 16a (the torque detection concavity and convexity 18a), magnetic permeability of the output shaft 16a (the torque detection concavity and convexity 18a) is reduced and a flux content for changing the impedance of both the coils 56, 56 configuring the torque detection coil unit 22a is reduced, so that the measurement sensitivity of torque is lowered. Therefore, in the example, the soft-nitriding treatment is performed after the cold forging, so that the processing strain is released. As a result, it is possible to improve the measurement sensitivity of torque, as compared to the case where the processing strain remains. In the meantime, FIG. 2 is a view showing a change in the measurement sensitivity of torque relative to a gap between the torque detection coil unit and the convex part of the torque detection concavity and convexity for an output shaft having a nitride layer formed thereon by a soft-nitriding treatment, like the example, and an output shaft having a hard coating formed thereon by electroless nickel plating. In any case, as the gap increases (the circumscribed circle of the torque detection concavity and convexity of the output shaft becomes smaller), the measurement sensitivity of torque is lowered. However, the measurement sensitivity of torque at the gap of the same magnitude is higher for the output shaft having a nitride layer formed thereon by the soft-nitriding treatment, which is shown with the line α in FIG. 2, than the output shaft having a hard coating formed thereon by electroless nickel plating, which is shown with the line β in FIG. 2.

Also, according to the example, the rear surface of the second inner ring 49 of the second ball bearing 37 is contacted to the positioning step part 42 of the output shaft 16a, so that the second ball bearing 37 (the second inner ring 49) is restrained from being displaced rearward. For this reason, as compared to a structure where the rear surface of the second inner ring 49 of the second ball bearing 37 is contacted to the radially inner end portion of the front surface of the metal insert 58 configuring the worm wheel 23a, so that the second ball bearing 37 (the second inner ring 49) is restrained from being displaced rearward, it is not necessary to perform end face processing for the front surface of the metal insert 58, so that it is possible to improve the productivity and to suppress the manufacturing cost.

Also, since a change in dimension of the output shaft 16a is small before and after the soft-nitriding treatment, it is not necessary to perform additional processing (for example, finish processing such as surface cutting and polishing processing) for the outer peripheral surface of the male stopper part 38, the outer peripheral surface of the torque detection concavity and convexity 18a, the outer peripheral surface of the first bearing fitting part 39, the outer peripheral surface of the positioning convex part 40, the outer peripheral surface of the worm wheel fitting part 41, the outer peripheral surface of the positioning step part 42, the outer peripheral surface of the second bearing fitting part 43, an outer surface of the snap ring engaging groove 44, and the outer peripheral surface of the joint fixing part 45, which configure the output shaft 16a. Accordingly, it is possible to improve the productivity and to suppress the manufacturing cost.

Also, according to the example, the nitride layer 57 is formed on the surfaces (the outer peripheral surface, the inner peripheral surface and both axial end faces) of the output shaft 16a, so that it is possible to increase the surface hardness of the output shaft 16a and to improve the antirust performance. Like this, according to the example, the soft-nitriding treatment is just performed, so that it is possible to improve the measurement sensitivity of torque by releasing the processing strain, and to improve the antirust performance of the part (for example, the male spline part 52 of the joint fixing part 45), which is arranged outside the housing 15a, of the output shaft 16a.

Also, according to the example, since the oxide coating is formed on the surface of the nitride layer 57, it is possible to further improve the antirust performance of the output shaft 16a.

### Industrial Applicability

In the above embodiment, the nitride layer is formed on all of the surfaces of the output shaft. However, when implementing the present invention, the nitride layer may be formed at least as specified in claim 1.

Also, in the above embodiment, the present invention is applied to the column assist-type electric power steering device. However, the present invention can also be applied to a variety of structures of electric power steering devices such as a pinion assist-type as well as the column assist-type.

### Description of Reference Numerals

1: steering wheel, 2: steering gear unit, 3: input shaft, 4: tie-rod, 5: steering shaft, 6: steering column, 7: universal joint, 8: intermediate shaft, 9: universal joint, 10: electric motor, 11: inner column, 12: outer column, 13, 13a: lower shaft, 14: upper shaft, 15, 15a: housing, 16, 16a: output shaft, 17: torsion bar, 18, 18a: torque detection concavity and convexity, 19, 19a: detection groove, 20, 20a: torque detection sleeve, 21: window hole, 22, 22a: torque detection coil unit, 23, 23a: worm wheel, 24, 24a: worm-type decelerator, 25: substrate, 26: support bracket, 27: spline hole, 28: cylindrical part, 29: female stopper part, 30: female-side tooth part, 31: female-side groove, 32: axial groove, 33: circumferential groove, 34: cover body, 35: main body, 36: first ball bearing, 37: second ball bearing, 38: male stopper part, 39: first bearing fitting part, 40: positioning convex part, 41: worm wheel fitting part, 42: positioning step part, 43: second bearing fitting part, 44: snap ring engaging groove, 45: joint fixing part, 46: male-side tooth part, 47: male-side groove, 48: first inner ring, 49: second inner ring, 50: concave groove, 51: snap ring, 52: male spline part, 53: concave groove, 54: pin, 55: protrusion, 56: coil, 57: nitride layer, 58: metal insert

## Claims

1. An electric power steering device comprising:
an input shaft (13a) having a fitting part near a front end thereof and applied with a steering force from a steering wheel;
an output shaft (16a) rotatably supported inside a housing (15a), coupled to the input shaft (13a) to be relatively rotatable within a predetermined angle range, having a torque detection encoder part (18a) provided at a part of an outer peripheral surface thereof, and applied with auxiliary power from an electric motor (10) which is a generation source;
a torsion bar (17) provided at an inner diameter side of the input shaft (13a) and the output shaft (16a) with coaxially coupling the input shaft (13a) and the output shaft (16a) each other; and
a torque detection sleeve (20a) which is arranged at an outer diameter side of the torque detection encoder part (18a), and of which a rear end portion is externally fitted and fixed to the fitting part,
wherein a worm wheel (23a) configuring a worm decelerator (24a) is externally fitted and fixed to a worm wheel fitting part (41) of the output shaft (16a), **characterized in that**
a rolling bearing (37), which is configured to rotatably support the output shaft (16a) inside the housing (15a), is externally fitted and fixed to a bearing fitting part (43), which is provided at a position axially adjacent to the worm wheel fitting part (41), of the output shaft (16a), and
wherein a side surface, which faces toward the worm wheel (23a), of both axial side surfaces of an inner ring configuring the rolling bearing (37) is contacted to a step part (42) by which the bearing fitting part (43) and the worm wheel fitting part (41) continue to each other
wherein a snap ring (51), which is configured to restrain the rolling bearing (37) from being displaced in an opposite direction to the worm wheel (23a) with respect to an axial direction, is engaged to an engagement groove (44) formed on the output shaft (16a), and
wherein a nitride layer (57) is formed at a part, at which the torque detection encoder part (18a) is formed, of the outer peripheral surface of the output shaft (16a),
wherein the nitride layer (57) is also formed on an outer peripheral surface of the worm wheel fitting part (41), on an outer peripheral surface of the step part (42), and at a part, at which the engagement groove (44) is formed, of the outer peripheral surface of the output shaft (16a).

2. The electric power steering device according to claim 1,
wherein one axial end portion of the output shaft (16a) is provided with a joint fixing part (45) for joining and fixing a torque transmission joint thereto, and
wherein the nitride layer (57) is formed on an outer peripheral surface of the joint fixing part (45).

3. A manufacturing method of an electric power steering device, the electric power steering device comprising:
an input shaft (13a) having a fitting part near a front end thereof and applied with a steering force from a steering wheel;
an output shaft (16a) rotatably supported inside a housing (15a), coupled to the input shaft (13a) to be relatively rotatable within a predetermined angle range, having a torque detection encoder part (18a) provided at a part of an outer peripheral surface thereof, and applied with auxiliary power from an electric motor (10) which is a generation source;
a torsion bar (17) provided at an inner diameter side of the input shaft (13a) and the output shaft (16a) with coaxially coupling the input shaft (13a) and the output shaft (16a) each other; and
a torque detection sleeve (20a) which is arranged at an outer diameter side of the torque detection encoder part (18a), and of which a rear end portion is externally fitted and fixed to the fitting part,
wherein a worm wheel (23a) configuring a worm decelerator (24a) is externally fitted and fixed to a worm wheel fitting part (41) of the output shaft (16a), **characterized in that**
a rolling bearing (37), which is configured to rotatably support the output shaft (16a) inside the housing (15a), is externally fitted and fixed to a bearing fitting part (43), which is provided at a position axially adjacent to the worm wheel fitting part (41), of the output shaft (16a), and
wherein a side surface, which faces toward the worm wheel (23a), of both axial side surfaces of an inner ring configuring the rolling bearing (37) is contacted to a step part (42) by which the bearing fitting part (43) and the worm wheel fitting part (41) continue to each other
wherein a snap ring (51), which is configured to restrain the rolling bearing (37) from being displaced in an opposite direction to the worm wheel (23a) with respect to an axial direction, is engaged to an engagement groove (44) formed on the output shaft (16a), and
wherein a nitride layer (57) is formed at a part, at which the torque detection encoder part (18a) is formed, of the outer peripheral surface of the output shaft (16a) by performing a soft-nitriding treatment
wherein the nitride layer (57) is also formed on an outer peripheral surface of the worm wheel fitting part (41), on an outer peripheral surface of the step part (42), and at a part, at which the engagement groove (44) is formed, of the outer peripheral surface of the output shaft (16a).

4. The manufacturing method of an electric power steering device according to claim 3,
wherein the output shaft (16a) is made by cold forging, and
wherein after the cold forging, the soft-nitriding treatment is performed.

## Patentansprüche

1. Elektrische Servolenkvorrichtung, die Folgendes umfasst:
eine Antriebswelle (13a), die in der Nähe ihres Vorderendes ein Passteil aufweist und durch eine Lenkkraft von einem Lenkrad angetrieben wird;
eine Abtriebswelle (16a), die drehbar in einem Gehäuse (15a) gelagert ist, mit der Antriebswelle (13a) gekoppelt ist, um innerhalb eines vorbestimmten Winkelbereichs relativ drehbar zu sein, ein Drehmomentdetektion-Drehgeberteil (18a) aufweist, das an einem Teil ihrer Außenumfangsfläche bereitgestellt ist, und die mit Hilfsleistung von einem Elektromotor (10), der eine Generatorquelle ist, beaufschlagt wird;
einen Torsionsstab (17), der an einer Innendurchmesserseite der Antriebswelle (13a) und der Abtriebswelle (16a) bereitgestellt ist und die Antriebswelle (13a) und die Abtriebswelle (16a) koaxial miteinander koppelt; und
eine Drehmomentdetektionshülse (20a), die an einer Außendurchmesserseite des Drehmomentdetektion-Drehgeberteils (18a) angeordnet ist und deren hinterer Endabschnitt außen an das Passteil angepasst und an diesem festgelegt ist,
wobei ein Schneckenrad (23a), das eine Schneckenradverzögerungseinheit (24a) bildet, außen an ein Schneckenradpassteil (41) der Abtriebswelle (16a) angepasst und festgelegt ist, **dadurch gekennzeichnet, dass**
ein Wälzlager (37), das ausgebildet ist, um die Abtriebswelle (16a) drehbar im Inneren des Gehäuses (15a) zu lagern, außen an ein Lagerpassteil (43) angepasst und an diesem festgelegt ist, das an einer zu dem Schneckenradpassteil (41) der Abtriebswelle (16a) axial angrenzenden Position bereitgestellt ist, und
wobei eine dem Schneckenrad (23a) zugewandte Seitenfläche von beiden axialen Seitenflächen eines Innenrings, der das Wälzlager (37) bildet, mit einem Stufenteil (42) in Kontakt gebracht ist, durch den das Lagerpassteil (43) und das Schneckenradpassteil (41) aneinander anschließen,
wobei ein Sicherungsring (51), der ausgelegt ist, um das Wälzlager (37) zurück zu halten, sich in Bezug auf eine axiale Richtung in einer zu dem Schneckenrad (23a) entgegengesetzte Richtung zu verlagern, in eine Eingriffsvertiefung (44), die auf der Abtriebswelle (16a) ausgebildet ist, eingreift und
wobei eine Nitridschicht (57) an einem Teil der Außenumfangsfläche der Abtriebswelle (16a) ausgebildet ist, an dem das Drehmomentdetektion-Drehgeberteil (18a) ausgebildet ist,
wobei die Nitridschicht (57) auch auf einer Außenumfangsfläche des Schneckenradpassteils (41),
auf einer Außenumfangsfläche des Stufenteils (42) und
auf einem Teil der Außenoberfläche der Abtriebswelle (16a) ausgebildet ist, auf der die Eingriffsvertiefung (44) ausgebildet ist.

2. Elektrische Servolenkvorrichtung nach Anspruch 1, wobei ein axialer Endabschnitt der Abtriebswelle (16a) mit einem Verbindungsbefestigungsteil (45) bereitgestellt ist, um eine Drehmomentübertragungsverbindung damit zu verbinden und daran zu befestigen, und wobei die Nitridschicht (57) auf einer Außenumfangsfläche des Verbindungsbefestigungsteils (45) ausgebildet ist.

3. Herstellungsverfahren einer elektrischen Servolenkvorrichtung, wobei die elektrische Servolenkvorrichtung Folgendes umfasst:
eine Antriebswelle (13a), die in der Nähe ihres Vorderendes ein Passteil aufweist und durch eine Lenkkraft von einem Lenkrad angetrieben wird;
eine Abtriebswelle (16a), die drehbar in einem Gehäuse (15a) gelagert ist, mit der Antriebswelle (13a) gekoppelt ist, um innerhalb eines vorbestimmten Winkelbereichs relativ drehbar zu sein, einen Drehmomentdetektion-Drehgeberteil (18a) aufweist, das an einem Teil ihrer Außenumfangsfläche bereitgestellt ist, und die mit Hilfsleistung von einem Elektromotor (10), der eine Generatorquelle ist, beaufschlagt wird;
einen Torsionsstab (17), der an einer Innendurchmesserseite der Antriebswelle (13a) und der Abtriebswelle (16a) bereitgestellt ist und die Antriebswelle (13a) und die Abtriebswelle (16a) koaxial miteinander koppelt; und
eine Drehmomentdetektionshülse (20a), die an einer Außendurchmesserseite des Drehmomentdetektion-Drehgeberteils (18a) angeordnet ist und deren hinterer Endabschnitt außen an das Passteil angepasst und an diesem festgelegt wird,
wobei ein Schneckenrad (23a), das eine Schneckenradverzögerungseinheit (24a) bildet, außen an ein Schneckenradpassteil (41) der Abtriebswelle (16a) angepasst und festgelegt ist, **dadurch gekennzeichnet, dass**
ein Wälzlager (37), das ausgebildet ist, um die Abtriebswelle (16a) drehbar in einem Gehäuse (15a) zu lagern, außen an ein Wälzlagerpassteil (43) angepasst und an diesem festgelegt wird, das an einer zu dem Schneckenradpassteil (41) der Abtriebswelle (16a) axial angrenzenden Position bereitgestellt ist, und
wobei eine dem Schneckenrad (23a) zugewandte Seitenfläche von beiden axialen Seitenflächen eines Innenrings, der das Wälzlager (37) bildet, mit einem Stufenteil (42) in Kontakt gebracht wird, durch den das Wälzlagerpassteil (43) und das Schneckenradpassteil (41) aneinander anschließen,
wobei ein Sicherungsring (51), der ausgelegt ist, um das Wälzlager (37) zurück zu halten, sich in Bezug auf eine axiale Richtung in einer zu dem Schneckenrad (23a) entgegengesetzte Richtung zu verlagern, in einer Eingriffsvertiefung (44), die auf der Abtriebswelle (16a) ausgebildet ist, in Eingriff gebracht wird, und
wobei eine Nitridschicht (57) an einem Teil der Außenumfangsfläche der Abtriebswelle (16a) ausgebildet wird, an dem das Drehmomentdetektion-Drehgeberteil (18a) ausgebildet ist,
wobei die Nitridschicht (57) auch auf einer Außenumfangsfläche des Schneckenradpassteils (41),
auf einer Außenumfangsfläche des Stufenteils (42) und
auf einem Teil der Außenoberfläche der Abtriebswelle (16a) ausgebildet ist, auf der die Eingriffsvertiefung (44) ausgebildet wird.

4. Herstellungsverfahren einer elektrischen Servolenkvorrichtung nach Anspruch 3, wobei die Abtriebswelle (16a) durch Kaltumformung hergestellt wird und wobei nach der Kaltumformung die Weichnitrierbehandlung durchgeführt wird.

## Revendications

1. Dispositif de direction assistée électrique comprenant :
un arbre d'entrée (13a) ayant une partie de montage près de son extrémité avant et auquel est appliquée une force de direction à partir d'un volant ;
un arbre de sortie (16a) supporté en rotation à l'intérieur d'un boîtier (15a), couplé à l'arbre d'entrée (13a) pour pouvoir tourner de manière relative dans une plage d'angles prédéterminée, ayant une partie de codeur de détection de couple (18a) prévue au niveau d'une partie d'une surface périphérique externe, et auquel est appliquée une puissance auxiliaire d'un moteur électrique (10) qui est une source de génération ;
une barre de torsion (17) prévue sur un côté de diamètre intérieur de l'arbre d'entrée (13a) et de l'arbre de sortie (16a) avec un couplage coaxial de l'arbre d'entrée (13a) et de l'arbre de sortie (16a) l'un à l'autre ; et
un manchon de détection de couple (20a) qui est agencé sur un côté de diamètre extérieur de la partie de codeur de détection de couple (18a), et dont une partie d'extrémité arrière est montée et fixée extérieurement à la partie de montage,
dans lequel une roue à vis sans fin (23a) configurant un décélérateur à vis sans fin (24a) est montée et fixée extérieurement à une partie de montage de roue à vis sans fin (41) de l'arbre de sortie (16a), **caractérisé en ce que**
un palier à roulement (37), qui est configuré pour supporter en rotation l'arbre de sortie (16a) à l'intérieur du logement (15a), est monté et fixé extérieurement à une pièce de montage de palier (43), qui est prévue dans une position axialement adjacente à la une partie de montage de roue à vis sans fin (41), de l'arbre de sortie (16a), et
dans lequel une surface latérale, qui fait face à la roue à vis sans fin (23a), de deux surfaces latérales axiales d'une bague intérieure configurant le palier à roulement (37), est mise en contact avec une partie de gradin (42) par laquelle la partie de montage de palier (43) et la pièce de montage de roue à vis sans fin (41) continuent l'une vers l'autre
dans lequel un anneau à ressort (51), qui est configuré pour empêcher le palier à roulement (37) d'être déplacé dans une direction opposée à la roue à vis sans fin (23a) par rapport à une direction axiale, est mis en prise dans une rainure de mise en prise (44) formée sur l'arbre de sortie (16a), et
dans lequel une couche de nitrure (57) est formée au niveau d'une partie, au niveau de laquelle la partie de codeur de détection de couple (18a) est formée, de la surface périphérique externe de l'arbre de sortie (16a),
dans lequel la couche de nitrure (57) est également formée sur une surface périphérique externe de la partie de montage de roue à vis sans fin (41), sur une surface périphérique externe de la partie de gradin (42), et
au niveau d'une partie, au niveau de laquelle la rainure de mise en prise (44) est formée, de la surface périphérique externe de l'arbre de sortie (16a).

2. Dispositif de direction assistée électrique selon la revendication 1,
dans lequel une partie d'extrémité axiale de l'arbre de sortie (16a) est pourvue d'une partie de fixation de joint (45) pour joindre et fixer un joint de transmission de couple à celle-ci, et
dans lequel la couche de nitrure (57) est formée sur une surface périphérique externe de la partie de fixation de joint (45).

3. Procédé de fabrication d'un dispositif de direction assistée électrique, le dispositif de direction assistée électrique comprenant :
un arbre d'entrée (13a) ayant une partie de montage près de son extrémité avant et auquel est appliquée une force de direction à partir d'un volant ;
un arbre de sortie (16a) supporté en rotation à l'intérieur d'un boîtier (15a), couplé à l'arbre d'entrée (13a) pour pouvoir tourner de manière relative dans une plage d'angles prédéterminée, ayant une partie de codeur de détection de couple (18a) prévue au niveau d'une partie d'une surface périphérique externe, et auquel est appliquée une puissance auxiliaire d'un moteur électrique (10) qui est une source de génération ;
une barre de torsion (17) prévue sur un côté de diamètre intérieur de l'arbre d'entrée (13a) et de l'arbre de sortie (16a) avec un couplage coaxial de l'arbre d'entrée (13a) et de l'arbre de sortie (16a) l'un à l'autre ; et
un manchon de détection de couple (20a) qui est agencé sur un côté de diamètre extérieur de la partie de codeur de détection de couple (18a), et dont une partie d'extrémité arrière est montée et fixée extérieurement à la partie de montage,
dans lequel une roue à vis sans fin (23a) configurant un décélérateur à vis sans fin (24a) est montée et fixée extérieurement à une partie de montage de roue à vis sans fin (41) de l'arbre de sortie (16a), **caractérisé en ce que**
un palier à roulement (37), qui est configuré pour supporter en rotation l'arbre de sortie (16a) à l'intérieur du logement (15a), est monté et fixé extérieurement à une pièce de montage de palier (43), qui est prévue dans une position axialement adjacente à la une partie de montage de roue à vis sans fin (41), de l'arbre de sortie (16a), et
dans lequel une surface latérale, qui fait face à la roue à vis sans fin (23a), de deux surfaces latérales axiales d'une bague intérieure configurant le palier à roulement (37), est mise en contact avec une partie de gradin (42) par laquelle la partie de montage de palier (43) et la partie de montage de roue à vis sans fin (41) continuent l'une vers l'autre
dans lequel un anneau à ressort (51), qui est configuré pour empêcher le palier à roulement (37) d'être déplacé dans une direction opposée à la roue à vis sans fin (23a) par rapport à une direction axiale, est mis en prise dans une rainure de mise en prise (44) formée sur l'arbre de sortie (16a), et
dans lequel une couche de nitrure (57) est formée au niveau d'une partie, au niveau de laquelle la partie de codeur de détection de couple (18a) est formée, de la surface périphérique externe de l'arbre de sortie (16a),
dans lequel la couche de nitrure (57) est également formée sur une surface périphérique externe de la partie de montage de roue à vis sans fin (41), sur une surface périphérique externe de la partie de gradin (42), et
au niveau d'une partie, au niveau de laquelle la rainure de mise en prise (44) est formée, de la surface périphérique externe de l'arbre de sortie (16a).

4. Procédé de fabrication d'un dispositif de direction assistée électrique selon la revendication 3,
dans lequel l'arbre de sortie (16a) est fabriqué par forgeage à froid, et
après le forgeage à froid, le traitement de nitruration douce est effectué.
